# EUROPEAN PATENT SPECIFICATION

(11) **EP 4 215 879 B1**
(45) Date of publication and mention of the grant of the patent: **02.07.2025**
(21) Application number: 22205646.7
(22) Date of filing: 04.11.2022
(51) Int. Cl.: G01D 5/244, G01D 5/347

(54) **SIGNAL PROCESSING APPARATUS FOR ENCODER AND METHOD OF GENERATING MULTI-TURN DATA OF ENCODER**
SIGNALVERARBEITUNGSVORRICHTUNG FÜR EINEN CODIERER UND VERFAHREN ZUR ERZEUGUNG VON MULTITURN-DATEN EINES CODIERERS
APPAREIL DE TRAITEMENT DE SIGNAL POUR CODEUR ET PROCÉDÉ DE GÉNÉRATION DE DONNÉES MULTITOUR DE CODEUR

(30) Priority: 24.01.2022 JP 2022008406
(43) Date of publication of application: 26.07.2023
(73) Proprietor: Tamagawa Seiki Co., Ltd., Iida-shi Nagano 395-8515 (JP)
(72) Inventor: KUBOTA, Muneaki, Iida-shi, 395-8515 (JP)
(74) Representative: Patentanwälte Geyer, Fehners & Partner mbB

(56) References cited:
- EP-B1- 1 225 427
- JP-A- S62 290 380
- JP-B2- 4 875 889
- US-A- 5 276 722

## Description

### BACKGROUND OF THE INVENTION

### 1. Field of the Invention

This invention relates to a signal processing apparatus for an encoder and a method of generating multi-turn data of an encoder.

### 2. Description of the Related Art

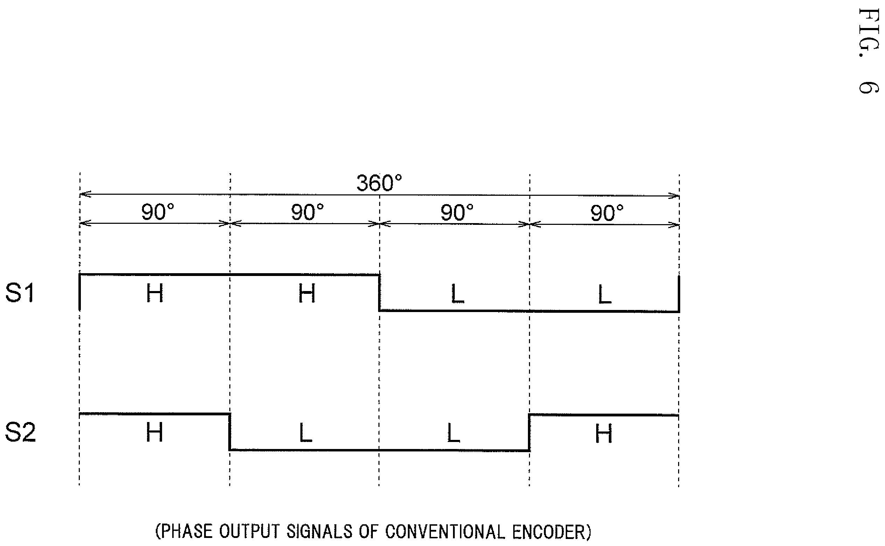

A signal processing apparatus for an encoder such as described in Japanese Patent Application Laid-open No. 2008-92340 is given as an example of a known conventional signal processing apparatus for an encoder. In the signal processing apparatus for an encoder described in Japanese Patent Application Laid-open No. 2008-92340, an encoder connected to a rotary shaft outputs two-phase output signals having mutually different phases one pulse per revolution of the rotary shaft as shown in FIG. 6. The number of revolutions of the rotary shaft can be counted, by inputting these two-phase output signals to a multi-turn counter. The EP 1 225 427 B1 also discloses an encoder.

### SUMMARY OF THE INVENTION

However, there is a problem with the signal processing apparatus for an encoder described in Japanese Patent Application Laid-open No. 2008-92340 in that, when an anomaly occurs in the encoder output signals and the phase output signal of one of the encoder output signals is fixed at H or L, this anomaly cannot be detected.

This invention was made to solve such a problem, and an object thereof is to provide a signal processing apparatus for an encoder that is able to detect anomalies in encoder output signals when such anomalies occur in the encoder output signals, and a method of generating multi-turn data of an encoder.

In order to solve the above problem, a signal processing apparatus for an encoder according to this invention includes an encoder configured to output multiphase output signals of at least three phases one pulse per revolution of a rotary shaft, at least three multi-turn counters configured to respectively receive input of different combinations of output signals of two phases out of the multiphase output signals, and respectively output counter values based on the output signals of two phases, and a comparison unit configured to receive input of the counter values and compare the counter values.

Also, the comparison unit may output a non-matching counter values alarm if the counter values do not match.

Also, the signal processing apparatus further includes a signal monitoring unit configured to monitor the multiphase output signals, and, if the phase output signals of the multiphase output signals are square waves capable of taking two types of values H and **L,** and the phase output signals of the multiphase output signals are all H at the same time or the phase output signals of the multiphase output signals are all L at the same time, the signal monitoring unit may output a signal anomaly alarm.

Also, the multiphase output signals output by the encoder consists of a first phase output signal, a second phase output signal and a third phase output signal, the multi-turn counters consist of a first multi-turn counter, a second multi-turn counter and a third multi-turn counter, the first multi-turn counter outputs a first counter value based on the first phase output signal and the second phase output signal, the second multi-turn counter outputs a second counter value based on the first phase output signal and the third phase output signal, and the third multi-turn counter outputs a third counter value based on the second phase output signal and the third phase output signal.

Also, either the first phase output signal, the second phase output signal and the third phase output signal have a phase difference of 120 degrees from each other, or the first phase output signal and the second phase output signal have a phase difference of 90 degrees, the first phase output signal and the third phase output signal have a phase difference of 135 degrees, and the second phase output signal and the third phase output signal have a phase difference of 225 degrees.

Also, in order to solve the above problem, a method of generating multi-turn data of an encoder according to this invention includes outputting multiphase output signals of at least three phases one pulse per revolution of a rotation angle of a rotary shaft with use of an encoder, respectively counting different combinations of output signals of two phases out of the multiphase output signals and outputting counter values with use of at least three multi-turn counters, and comparing the counter values with use of a comparison unit.

A signal processing device for an encoder according to this invention includes an encoder configured to output multiphase output signals of at least three phases one pulse per revolution of a rotary shaft, at least three multi-turn counters configured to respectively receive input of different combinations of output signals of two phases having different phases out of the multiphase output signals, and respectively output counter values based on the output signals of two phases, and a comparison unit configured to receive input of the counter values and compare the counter values, thus enabling anomalies in the encoder output signals to be detected when such anomalies occur in the encoder output signals.

Also, a method of generating multi-turn data of an encoder according to the present invention includes outputting multiphase output signals of at least three phases one pulse per revolution of a rotation angle of a rotary shaft with use of an encoder, respectively counting different combinations of output signals of two phases out of the multiphase output signals and outputting counter values with use of at least three multi-turn counters, and comparing the counter values with use of a comparison unit, thus enabling anomalies in the encoder output signals to be detected when such anomalies occur in the encoder output signals.

### BRIEF DESCRIPTION OF THE DRAWINGS

FIG. 1 shows a signal processing apparatus for an encoder in Embodiment 1 of the present invention;
FIG. 2 shows respective phase output signals of an encoder in Embodiment 1 of the present invention;
FIG. 3 shows respective phase output signals of an encoder in Embodiment 2 of the present invention;
FIG. 4 shows a signal processing apparatus for an encoder in Embodiment 3 of the present invention;
FIG. 5 shows respective phase output signals of an encoder in Embodiment 3 of the present invention; and
FIG. 6 shows respective phase output signals of a conventional encoder.

### DESCRIPTION OF THE PREFERRED EMBODIMENTS

### Embodiment 1

Hereinafter, a signal processing apparatus for an encoder according to Embodiment 1 of the present invention will be described based on the accompanying drawings.

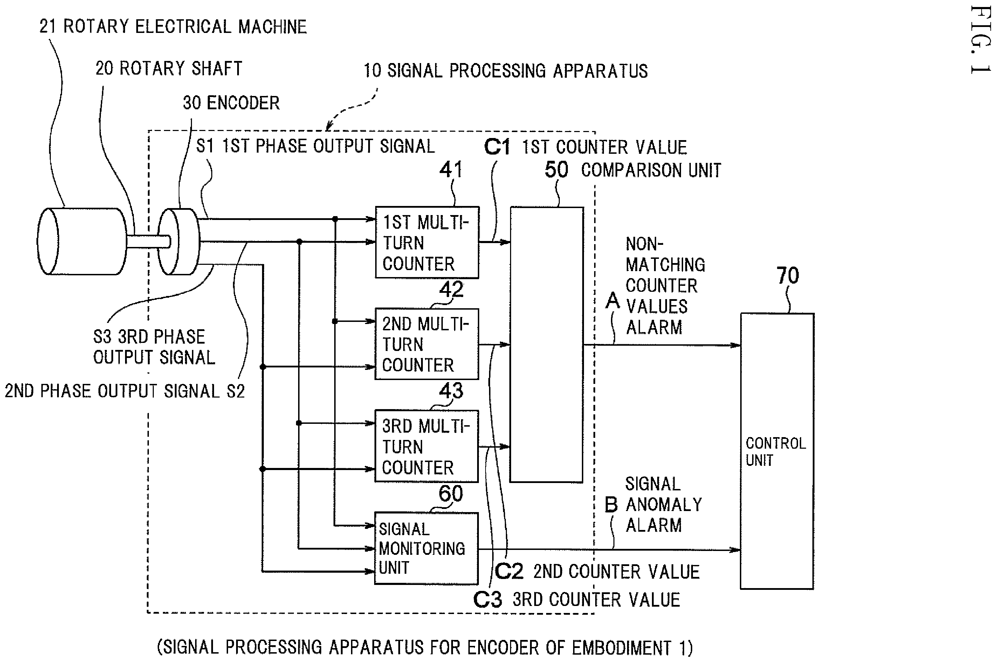

FIG. 1 is a schematic view showing a signal processing apparatus for an encoder of Embodiment 1. A signal processing apparatus 10 is provided with an encoder 30 which is a known optical rotary encoder. The encoder 30 is connected to a rotary shaft 20 of a rotary electrical machine 21, and detects the number of revolutions and rotation direction of the rotary shaft 20. Also, the encoder 30 has a waveform shaping circuit (not shown), and outputs output signals of three phases, namely, a first phase output signal S1, a second phase output signal S2 and a third phase output signal S3, via the waveform shaping circuit.

Also, the signal processing apparatus 10 is provided with a first multi-turn counter 41, a second multi-turn counter 42 and a third multi-turn counter 43 for counting the output signals of the encoder 30. The first phase output signal S1 and the second phase output signal S2 of the encoder 30 are input to the first multi-turn counter 41. The first phase output signal S1 and the third phase output signal S3 of the encoder 30 are input to the second multi-turn counter 42. The second phase output signal S2 and the third phase output signal S3 of the encoder 30 are input to the third multi-turn counter 43.

Also, the signal processing apparatus 10 is provided with a comparison unit 50 that is connected to the first multi-turn counter 41, the second multi-turn counter 42 and the third multi-turn counter 43. Furthermore, the signal processing apparatus 10 is provided with a signal monitoring unit 60 that is connected to the encoder 30, in order to monitor the output signals of the encoder 30. The first phase output signal S1, the second phase output signal S2 and the third phase output signal S3 of the encoder 30 are input to the signal monitoring unit 60. Furthermore, the signal processing apparatus 10 is provided with a control unit 70 that performs overall control of the signal processing apparatus 10.

Next, operations of the signal processing apparatus 10 for an encoder according to Embodiment 1 will be described.

The encoder 30 of the signal processing apparatus 10 detects the revolution of the rotary shaft 20 of the rotary electrical machine 21 and outputs three-phase output signals consisting of the first phase output signal S1, the second phase output signal S2 and the third phase output signal S3 shaped into square waves by a waveform shaping circuit (not shown).

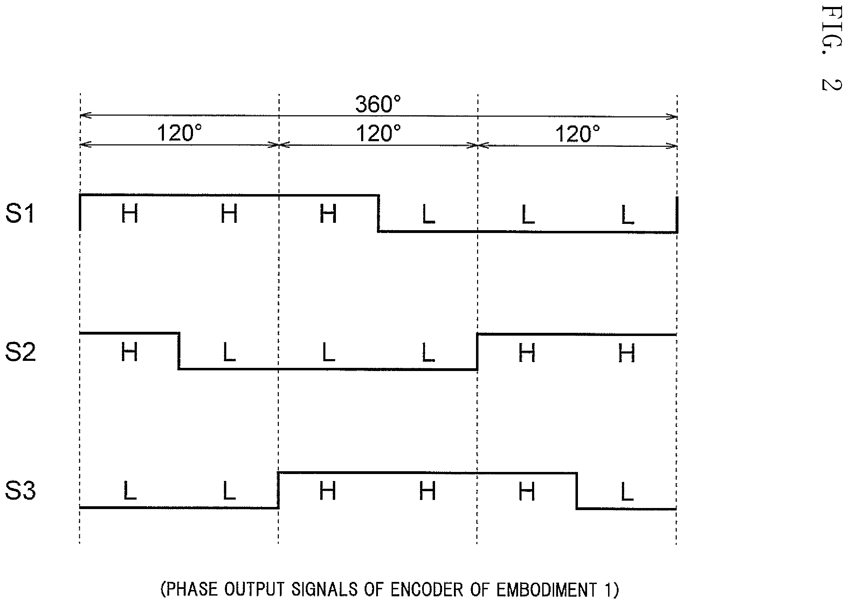

FIG. 2 shows the three-phase output signals that are output from the encoder 30 (see FIG. 1) of Embodiment 1. The first phase output signal S1, the second phase output signal S2 and the third phase output signal S3 are square-wave three-phase output signals that are output one pulse per revolution, that is, 360 degree revolution, of the rotary shaft 20, and take either an H or L value. Also, the first phase output signal S1, the second phase output signal S2 and the third phase output signal S3 have a phase difference of 120 degrees from each other.

Next, the first phase output signal S1 and the second phase output signal S2 are input to the first multi-turn counter 41 as shown in FIG. 1. The first multi-turn counter 41 detects the rotation direction of the rotary shaft 20 based on the first phase output signal S1 and the second phase output signal S2. Also, the first multi-turn counter 41 counts the number of pulses of the first phase output signal S1 and the second phase output signal S2, and outputs the resultant counter value to the comparison unit 50 as a first counter value C1.

Also, the first phase output signal S1 and the third phase output signal S3 are input to the second multi-turn counter 42. The second multi-turn counter 42 detects the rotation direction of the rotary shaft 20 based on the first phase output signal S1 and the third phase output signal S3. Also, the second multi-turn counter 42 counts the number of pulses of the first phase output signal S1 and the third phase output signal S3, and outputs the resultant counter value to the comparison unit 50 as a second counter value C2.

Furthermore, the second phase output signal S2 and the third phase output signal S3 are input to the third multi-turn counter 43. The third multi-turn counter 43 detects the rotation direction of the rotary shaft 20 based on the second phase output signal S2 and the third phase output signal S3. Also, the third multi-turn counter 43 counts the number of pulses of the second phase output signal S2 and the third phase output signal S3, and outputs the resultant counter value to the comparison unit 50 as a third counter value C3.

Next, the comparison unit 50 compares the first counter value C1 of the first multi-turn counter 41, the second counter value C2 of the second multi-turn counter 42 and the third counter value C3 of the third multi-turn counter 43. If the first counter value C1, the second counter value C2 and the third counter value C3 that are compared do not match, the comparison unit 50 then outputs a non-matching counter values alarm A to the control unit 70 of the signal processing apparatus 10.

For example, if the value of any of the first phase output signal S1, the second phase output signal S2 and the third phase output signal S3 remains unchanged at H or L due, for instance, to a failure of a signal output unit (not shown) of the encoder 30, the first counter value C1, the second counter value C2 and the third counter value C3 of the first multi-turn counter 41, the second multi-turn counter 42 and the third multi-turn counter 43 will not match, and thus the comparison unit 50 outputs the non-matching counter values alarm A. The control unit 70 of the signal processing apparatus 10 is thereby able to detect that an anomaly has occurred in the signal processing apparatus 10, if the non-matching counter values alarm A is input. Similarly, if a failure occurs in any of the first multi-turn counter 41, the second multi-turn counter 42 and the third multi-turn counter 43, resulting in a counter value not being output from one of the multi-turn counters, the first counter value C1, the second counter value C2 and the third counter value C3 will not match, and thus the comparison unit 50 outputs the non-matching counter values alarm A. The control unit 70 of the signal processing apparatus 10 is thereby able to detect that an anomaly of non-matching counter values has occurred.

Also, the signal monitoring unit 60 constantly monitors the combination of the value of the first phase output signal S1, the value of the second phase output signal S2 and the value of the third phase output signal S3 of the encoder 30. When the encoder 30 is operating, the combinations of the value of the first phase output signal S1, the value of the second phase output signal S2 and the value of the third phase output signal S3 will be the six combinations (H, H, L), (H, L, L), (H, L, H), (L, L, H), (L, H, H) and (L, H, L), as shown in FIG. 2. Therefore, if the combination of the value of the first phase output signal S1, the value of the second phase output signal S2 and the value of the third phase output signal S3 is (H, H, H), or (L, L, L), that is, if the first phase output signal S1, the second phase output signal S2 and the third phase output signal S3 are all H or L at the same time, an anomaly of some sort has occurred in the encoder 30 of the signal processing apparatus 10, signal lines thereof or the like, and the values of the output signals of all the phases remain unchanged at H or L.

If the combination of the value of the first phase output signal S1, the value of the second phase output signal S2 and the value of the third phase output signal S3 is (H, H, H) or (L, L, L), the signal monitoring unit 60 outputs a signal anomaly alarm B to the control unit 70 of the signal processing apparatus 10 as shown in FIG. 1. The control unit 70 of the signal processing apparatus 10 is thereby able to detect that an anomaly in the output signals of the encoder 30 has occurred.

Note that, in a conventional signal processing apparatus for an encoder that outputs output signals of two phases, the combinations of the value of the first phase output signal and the value of the second phase output signal will be the four combinations (H, H), (H, L), (L, H) and (L, L) as shown in FIG. 6. Therefore, if the combination of the value of the first phase output signal and the value of the second phase output signal is (H, H), it can only be determined that the angle of the rotary shaft is an angle at which the combination of the output signals will be (H, H) and the encoder is functioning normally, or that the values of the output signals of all the phases remain unchanged at H due to an anomaly of some sort having occurred in the encoder or the like. Similarly, if the combination of the value of the first phase output signal and the value of the second phase output signal is (L, L), it can only be determined that the angle of the rotary shaft is an angle at which the combination of the output signals will be (L, L) and the encoder is functioning normally, or that the values of the output signals of all the phases remain unchanged at L due to an anomaly of some sort having occurred in the encoder or the like.

On the other hand, with the signal processing apparatus 10 (see FIG. 1) of Embodiment 1, if the encoder 30, the signal lines and the like are functioning normally as described above, the combination of the value of the first phase output signal S1, the value of the second phase output signal S2 and the value of the third phase output signal S3 will not be (H, H, H) or (L, L, L) as shown in FIG. 2, and if the combination of the output signal values is (H, H, H) or (L, L, L), the signal monitoring unit 60 outputs the signal anomaly alarm B to the control unit 70 of the signal processing apparatus 10, thus enabling the occurrence of an anomaly in the encoder 30, the signal lines or the like to be detected.

In this way, the signal processing apparatus 10 for an encoder according to Embodiment 1 includes the encoder 30 that outputs the first phase output signal S1, the second phase output signal S2 and the third phase output signal S3 one pulse per revolution of the rotary shaft 20, at least three multi-turn counters including the first multi-turn counter 41, the second multi-turn counter 42 and the third multi-turn counter 43 that respectively receive input of different combinations of output signals of two phases out of the first phase output signal S1, the second phase output signals S2 and the third phase output signal S3, and respectively output the first counter value C1, the second counter value C2 and the third counter value C3 based on the output signals of two phases, and the comparison unit 50 that receives input of the first counter value C1, the second counter value C2 and the third counter value C3, and compares the first counter value C1, the second counter value C2 and the third counter value C3, thus enabling an anomaly in the encoder output signals to be detected.

Also, the comparison unit 50 outputs the non-matching counter values alarm A if the first counter value C1, the second counter value C2 and the third counter value C3 do not match, thus enabling the occurrence of an anomaly of non-matching counter values to be detected in the signal processing apparatus 10.

Also, the signal processing apparatus 10 further includes the signal monitoring unit 60 that monitors the first phase output signal S1, the second phase output signal S2 and the third phase output signal S3, and, in the case where the first phase output signal S1, the second phase output signal S2 and the third phase output signal S3 are square waves capable of taking two types of values H and L, and the values of the first phase output signal S1, the second phase output signal S2 and the third phase output signal S3 are all H at the same time or the values of the first phase output signal S1, the second phase output signal S2 and the third phase output signal S3 are all L at the same time, the signal monitoring unit 60 outputs the signal anomaly alarm B, thus enabling an anomaly in which the values of the encoder output signals are all H at the same time or an anomaly in which the values of the encoder output signal are all L at the same time to be detected in the signal processing apparatus 10.

Also, the multiphase output signals that are output by the encoder 30 consist of the first phase output signal S1, the second phase output signal S2 and the third phase output signal S3, the multi-turn counters consist of the first multi-turn counter 41, the second multi-turn counter 42 and the third multi-turn counter 43, and the first multi-turn counter 41 outputs the first counter value C1 based on the first phase output signal S1 and the second phase output signal S2, the second multi-turn counter 42 outputs the second counter value C2 based on the first phase output signal S1 and the third phase output signal S3, and the third multi-turn counter 43 outputs the third counter value C3 based on the second phase output signal S2 and the third phase output signal S3, thus enabling anomalies in the encoder output signals to be detected in the case where the output signals of the encoder 30 are three-phase output signals.

Also, since the phase difference between the first phase output signal S1, the second phase output signal S2 and the third phase output signal S3 is 120 degrees, the values of the first phase output signal S1, the second phase output signal S2 and the third phase output signal S3 will not all be H or L at the same time in the case where the encoder 30, the signal lines and the like are functioning normally, thus enabling an anomaly in which the values of the encoder output signals are all H at the same time or an anomaly in which the values of the encoder output signals are all L at the same time to be detected.

Also, the method of generating multi-turn data of an encoder according to Embodiment 1 includes outputting the first phase output signal S1, the second phase output signal S2 and the third phase output signal S3 one pulse per revolution of the rotation angle of the rotary shaft 20 with use the encoder 30, respectively counting different combinations of output signals of two phases out of the first phase output signal S1, the second phase output signal S2 and the third phase output signal S3 and outputting the first counter values C1, the second counter value C2 and the third counter value C3 with use of the first multi-turn counter 41, the second multi-turn counter 42 and the third multi-turn counter 43, and comparing the counter values with use of the comparison unit 50, thus enabling an anomaly in the encoder output signals to be detected.

### Embodiment 2

Next, a signal processing apparatus for an encoder according to Embodiment 2 of the present invention will be described based on the accompanying drawings. Note that, in the following embodiments, reference signs that are the same as signs in FIGS. 1 and 2 of Embodiment 1 are the same or similar constituent elements, and thus detailed description thereof will be omitted. In the signal processing apparatus for an encoder according to Embodiment 2, the phase difference between the first phase output signal, the second phase output signal and the third phase output signal of the encoder 30 has been changed compared with Embodiment 1.

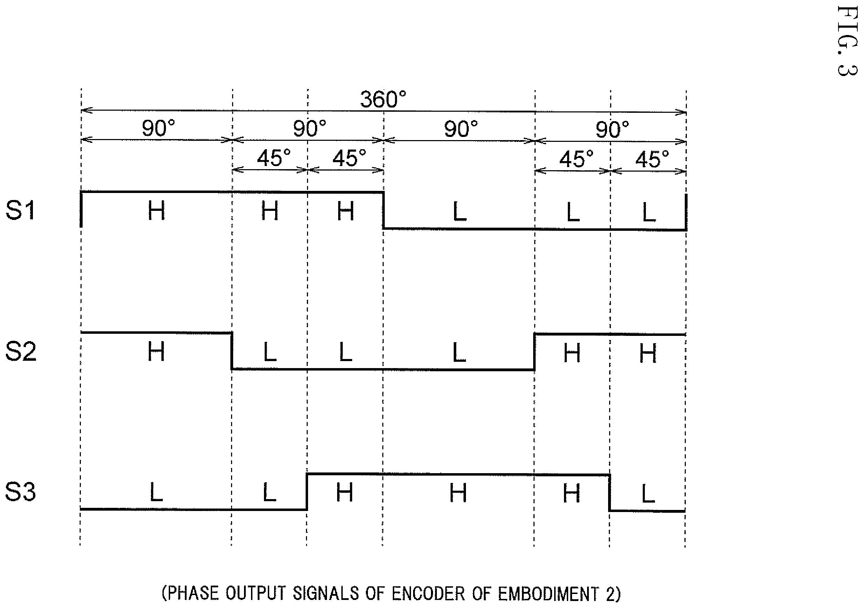

FIG. 3 is a schematic diagram showing the respective phase output signals of the encoder 30 (see FIG. 1) of Embodiment 2. The first phase output signal S1, the second phase output signal S2 and the third phase output signal S3 that are output from the encoder 30 are square-wave three-phase output signals that are output one pulse per 360 degree revolution of the rotary shaft 20.

The encoder 30 is configured such that the phase difference of the second phase output signal S2 from the first phase output signal S1 is 90 degrees. The encoder 30 is configured such that the phase difference of the third phase output signal S3 from the first phase output signal S1 is 135 degrees. Furthermore, the encoder 30 is configured such that the phase difference of the third phase output signal S3 from the second phase output signal S2 is 225 degrees. The remaining configuration thereof is the same as Embodiment 1.

Next, operations of the signal processing apparatus 10 of Embodiment 2 will be described as shown in FIG. 1. In the signal processing apparatus 10 of Embodiment 2, the operation in which the comparison unit 50 outputs the non-matching counter values alarm A to the control unit 70 of the signal processing apparatus 10 in the case where the first counter value C1, the second counter value C2 and the third counter value C3 do not match is the same as Embodiment 1.

Also, as shown in FIG. 3, the combinations of the value of the first phase output signal S1, the value of the second phase output signal S2 and the value of the third phase output signal S3 when the encoder 30 of Embodiment 2 is functioning normally are the six combinations (H, H, L), (H, L, L), (H, L, H), (L, L, H), (L, H, H) and (L, H, L). That is, when the encoder 30 is functioning normally, the combination of the value of the first phase output signal S1, the value of the second phase output signal S2 and the value of the third phase output signal S3 will not be (H, H, H) or (L, L, L). Therefore, if the combination of the value of the first phase output signal S1, the value of the second phase output signal S2 and the value of the third phase output signal S3 is (H, H, H) or (L, L, L), the signal monitoring unit 60 outputs the signal anomaly alarm B to the control unit 70 of the signal processing apparatus 10. The control unit 70 of the signal processing apparatus 10 is thereby able to detect that an anomaly in the output signals has occurred.

In this way, in the signal processing apparatus 10 for an encoder according to Embodiment 2, the phase difference between the first phase output signal S1 and the second phase output signal S2 is 90 degrees, the phase difference between the first phase output signal S1 and the third phase output signal S3 is 135 degrees, and the phase difference between the second phase output signal S2 and the third phase output signal S3 is 225 degrees, thus enabling the occurrence of an anomaly in the output signals to be detected by the signal monitoring unit 60 of the signal processing apparatus 10 similarly to Embodiment 1.

### Embodiment 3

Next, a signal processing apparatus for an encoder according to Embodiment 3 of the present invention will be described based on the accompanying drawings. In the signal processing apparatus of the encoder according to Embodiment 3, the number of phases of output signals of the encoder has been changed to four phases compared with Embodiment 1.

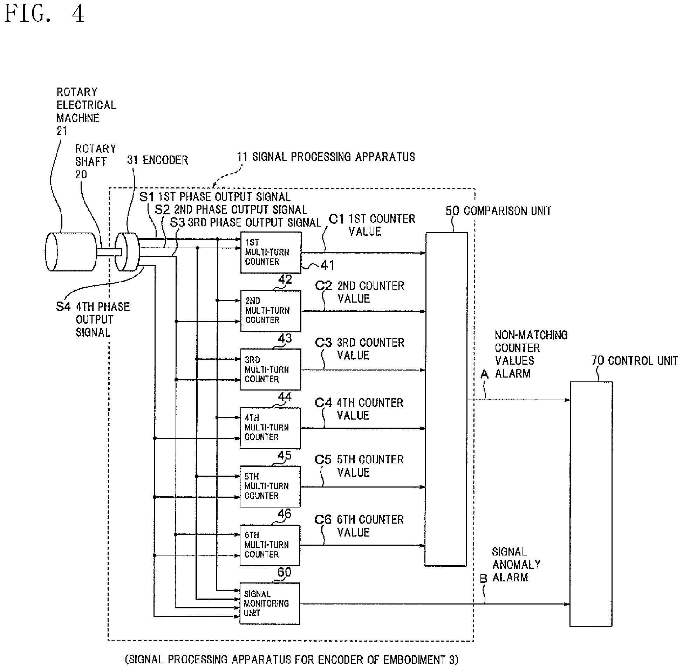

FIG. 4 is a schematic diagram of the signal processing apparatus for an encoder of Embodiment 3. A signal processing apparatus 11 is provided with an encoder 31 that is a known optical rotary encoder. The encoder 31 outputs four-phase output signals, namely, a first phase output signal S1, a second phase output signal S2, a third phase output signal S3 and a fourth phase output signal S4, shaped into square waves by a waveform shaping circuit (not shown).

Also, the signal processing apparatus 11 is provided with a total of six multi-turn counters for counting the output signals of the encoder 31, namely, a first multi-turn counter 41, a second multi-turn counter 42, a third multi-turn counter 43, a fourth multi-turn counter 44, a fifth multi-turn counter 45 and a sixth multi-turn counter 46.

The first phase output signal S1 and the second phase output signal S2 of the encoder 31 are input to the first multi-turn counter 41. The first phase output signal S1 and the third phase output signal S3 of the encoder 31 are input to the second multi-turn counter 42. The second phase output signal S2 and the third phase output signal S3 of the encoder 31 are input to the third multi-turn counter 43. The first phase output signal S1 and the fourth phase output signal S4 of the encoder 31 are input to the fourth multi-turn counter 44. The second phase output signal S2 and the fourth phase output signal S4 of the encoder 31 are input to the fifth multi-turn counter 45. The third phase output signal S3 and the fourth phase output signal S4 of the encoder 31 are input to the sixth multi-turn counter 46.

Also, the signal processing apparatus 11 is provided with a comparison unit 50 to which the first multi-turn counter 41, the second multi-turn counter 42, the third multi-turn counter 43, the fourth multi-turn counter 44, the fifth multi-turn counter 45 and the sixth multi-turn counter 46 are connected. Furthermore, the signal processing apparatus 11 is provided with a signal monitoring unit 60 for monitoring the output signals of the encoder 31. The first phase output signal S1, the second phase output signal S2, the third phase output signal S3 and the fourth phase output signal S4 of the encoder 31 are input to the signal monitoring unit 60. The remaining configuration thereof is the same as Embodiment 1.

Next, operations of the signal processing apparatus 11 of Embodiment 3 will be described.

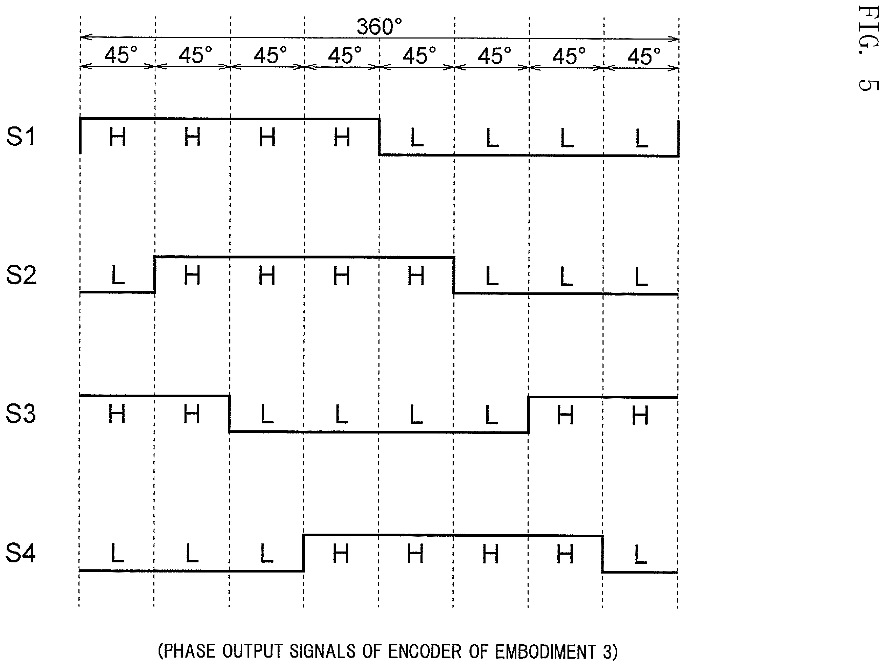

FIG. 5 shows the four-phase output signals that are output from the encoder 31 (see FIG. 4) of Embodiment 3. The first phase output signal S1, the second phase output signal S2, the third phase output signal S3 and the fourth phase output signal S4 are square wave four-phase output signals that are output one pulse per revolution, that is, 360 degree revolution, of the rotary shaft 20, and take either an H or L value. Also, the second phase output signal S2 has a phase difference of 45 degrees from the first phase output signal S1, the third phase output signal S3 has a phase difference of 90 degrees from the first phase output signal S1, and the fourth phase output signal S4 has a phase difference of 135 degrees from the first phase output signal S1.

Next, the first phase output signal S1 and the second phase output signal S2 are input to the first multi-turn counter 41 as shown in FIG. 4. The first multi-turn counter 41 detects the rotation direction of the rotary shaft 20 based on the first phase output signal S1 and the second phase output signal S2. Also, the first multi-turn counter 41 counts the number of pulses of the first phase output signal S1 and the second phase output signal S2, and outputs the resultant counter value to the comparison unit 50 as a first counter value C1.

Also, the first phase output signal S1 and the third phase output signal S3 are input to the second multi-turn counter 42. The second multi-turn counter 42 detects the rotation direction of the rotary shaft 20 based on the first phase output signal S1 and the third phase output signal S3. Also, the second multi-turn counter 42 counts the number of pulses of the first phase output signal S1 and the third phase output signal S3, and outputs the resultant counter value to the comparison unit 50 as a second counter value C2.

Also, the second phase output signal S2 and the third phase output signal S3 are input to the third multi-turn counter 43. The third multi-turn counter 43 detects the rotation direction of the rotary shaft 20 based on the second phase output signal S2 and the third phase output signal S3. Also, the third multi-turn counter 43 counts the number of pulses of the second phase output signal S2 and the third phase output signal S3, and outputs the resultant counter value to the comparison unit 50 as a third counter value C3.

Also, the first phase output signal S1 and the fourth phase output signal S4 are input to the fourth multi-turn counter 44. The fourth multi-turn counter 44 detects the rotation direction of the rotary shaft 20 based on the first phase output signal S1 and the fourth phase output signal S4. Also, the fourth multi-turn counter 44 counts the number of pulses of the first phase output signal S1 and the fourth phase output signal S4, and outputs the resultant counter value to the comparison unit 50 as a fourth counter value C4.

Also, the second phase output signal S2 and the fourth phase output signal S4 are input to the fifth multi-turn counter 45. The fifth multi-turn counter 45 detects the rotation direction of the rotary shaft 20 based on the second phase output signal S2 and the fourth phase output signal S4. Also, the fifth multi-turn counter 45 counts the number of pulses of the second phase output signal S2 and the fourth phase output signal S4, and outputs the resultant counter value to the comparison unit 50 as a fifth counter value C5.

Also, the third phase output signal S3 and the fourth phase output signal S4 are input to the sixth multi-turn counter 46. The sixth multi-turn counter 46 detects the rotation direction of the rotary shaft 20 based on the third phase output signal S3 and the fourth phase output signal S4. Also, the sixth multi-turn counter 46 counts the number of pulses of the third phase output signal S3 and the fourth phase output signal S4, and outputs the resultant counter value to the comparison unit 50 as a sixth counter value C6.

Next, the comparison unit 50 compares the first counter value C1 of the first multi-turn counter 41, the second counter value C2 of the second multi-turn counter 42, the third counter value C3 of the third multi-turn counter 43, the fourth counter value C4 of the fourth multi-turn counter 44, the fifth counter value C5 of the fifth multi-turn counter 45 and the sixth counter value C6 of the sixth multi-turn counter 46. If the first counter value C1, the second counter value C2, the third counter value C3, the fourth counter value C4, the fifth counter value C5 and the sixth counter value C6 that are compared do not match, the comparison unit 50 outputs the non-matching counter values alarm A to the control unit 70 of the signal processing apparatus 11.

Also, the signal monitoring unit 60 constantly monitors the combination of the value of the first phase output signal S1, the value of the second phase output signal S2, the value of the third phase output signal S3 and the value of the fourth phase output signal S4 of the encoder 31. When the signal processing apparatus 11 is operating, the combinations of the value of the first phase output signal S1, the value of the second phase output signal S2, the value of the third phase output signal S3 and the value of the fourth phase output signal S4 will be the eight combinations (H, L, H, L), (H, H, H, L), (H, H, L, L), (H, H, L, H), (L, H, L, H), (L, L, L, H), (L, L, H, H) and (L, L, H, L), as shown in FIG. 5. Therefore, if the combination of the value of the first phase output signal S1, the value of the second phase output signal S2, the value of the third phase output signal S3 and the value of the fourth phase output signal S4 is (H, H, H, H) or (L, L, L, L), that is, if the first phase output signal S1, the second phase output signal S2, the third phase output signal S3 and the fourth phase output signal S4 are all H or L at the same time, an anomaly of some sort has occurred in the encoder 31 of the signal processing apparatus 10, the signal lines thereof or the like, and the values of the output signals of all the phases remain unchanged at H or L.

If the combination of the value of the first phase output signal S1, the value of the second phase output signal S2, the value of the third phase output signal S3 and the value of the fourth phase output signal S4 is (H, H, H, H) or (L, L, L, L), the signal monitoring unit 60 outputs the signal anomaly alarm B to the control unit 70 of the signal processing apparatus 11. The control unit 70 of the signal processing apparatus 11 is thereby able to detect that an anomaly in the output signals has occurred.

In this way, in the signal processing apparatus 11 for an encoder according to Embodiment 3, the comparison unit 50 outputs the non-matching counter values alarm A to the control unit 70 of the signal processing apparatus 11, in the case where the first counter value C1, the second counter value C2, the third counter value C3, the fourth counter value C4, the fifth counter value C5 and the sixth counter value C6 do not match. Also, in the signal processing apparatus 11 for an encoder according to Embodiment 3, the signal monitoring unit 60 outputs the signal anomaly alarm B to the control unit 70 of the signal processing apparatus 11, in the case where the combination of the value of the first phase output signal S1, the value of the second phase output signal S2, the value of the third phase output signal S3 and the value of the fourth phase output signal S4 is (H, H, H, H) or (L, L, L, L). Thus, anomalies in the encoder output signals can also be detected in the case where the encoder 31 outputs four-phase output signals, due to the non-matching counter values alarm A and the signal anomaly alarm B being input to the control unit 70 of the signal processing apparatus 11.

Also, an optical rotary encoder that outputs three-phase output signals is used as the encoder 30 in Embodiments 1 and 2 of the present invention, and an optical rotary encoder that outputs four-phase output signals is used as the encoder 31 in Embodiment 3, but the present invention is not limited thereto. For example, an optical rotary encoder that outputs output signals of five phases or more may be used as the encoders 30 and 31, in which case the signal processing apparatuses 10 and 11 need only be provided with an appropriate number of multi-turn counters. For example, another type of rotary encoder such as a magnetic rotary encoder may be used as the encoders 30 and 31, instead of an optical rotary encoder.

The signal processing apparatus 10 for an encoder of the present invention includes the encoder 30 that outputs the first phase output signal S1, the second phase output signal S2 and the third phase output signal S3 one pulse per revolution of the rotary shaft 20, at least three multi-turn counters including the first multi-turn counter 41, the second multi-turn counter 42 and the third multi-turn counter 43 that respectively receive input of different combinations of output signals of two phases out of the first phase output signal S1, the second phase output signal S2 and the third phase output signal S3, and respectively output the first counter value C1, the second counter value C2 and the third counter value C3 based on the output signals of two phases, and the comparison unit 50 that receives input of the first counter value C1, the second counter value C2 and the third counter value C3, and compares the first counter value C1, the second counter value C2 and the third counter value C3, thus enabling an anomaly in the encoder output signals to be detected, and being suitable for use in the signal processing apparatus 10 for an encoder having a multi-turn encoder 30 and first, second, third and fourth multi-turn counters 41, 42, 43 and 44.

## Claims

1. A signal processing apparatus for an encoder comprising:
an encoder (30, 31) configured to output multiphase output signals of at least three phases, each output signal having one pulse per revolution of a rotary shaft (20);
at least three multi-turn counters (41, 42, 43), configured to respectively output counter values, and ,
a comparison unit (50) configured to receive input of the counter values and compare the counter values,
**characterized in that**
the counter values are based on the output signals of two phases,
the at least three multi-turn counters (41, 42, 43) are configured to respectively receive input of different combinations of output signals of two phases out of the multiphase output signals,
the signal processing apparatus further comprises a signal monitoring unit (60) configured to monitor the multiphase output signals,
wherein, if the phase output signals of the multiphase output signals are square waves capable of taking two types of values H and L, and the phase output signals of the multiphase output signals are all H at the same time or the phase output signals of the multiphase output signals are all L at the same time, the signal monitoring unit (60) is configured to output a signal anomaly alarm, wherein
the multiphase output signals output by the encoder (30) consist of a first phase output signal, a second phase output signal and a third phase output signal,
the multi-turn counters consist of a first multi-turn counter (41), a second multi-turn counter (42) and a third multi-turn counter (43),
the first multi-turn counter (41) outputs a first counter value based on the first phase output signal and the second phase output signal,
the second multi-turn counter (42) outputs a second counter value based on the first phase output signal and the third phase output signal,
the third multi-turn counter (43) outputs a third counter value based on the second phase output signal and the third phase output signal, and
either the first phase output signal, the second phase output signal and the third phase output signal have a phase difference of 120 degrees from each other,
or the first phase and the second phase output signal have a phase difference of 90 degrees, the first phase output signal and the third phase output signal have a phase difference of 135 degrees and the second phase output signal and the third phase output signal have a phase difference of 225 degrees.

2. The signal processing apparatus for an encoder according to claim 1, wherein the comparison unit (50) outputs a non-matching counter values alarm if the counter values do not match.

3. A method of generating multi-turn data of an encoder, comprising:
outputting multiphase output signals of at least three phases, each output signal having one pulse per revolution of a rotation angle of a rotary shaft (20) with use of an encoder (30 and 31);
outputting counter values with use of at least three multi-turn counters (41, 42, 43); and
comparing the counter values with use of a comparison unit (50),
**characterized in that**
the method comprising respectively counting different combinations of output signals of two phases out of the multiphase output signals, and
the method comprises monitoring the multiphase output signals with use of a signal monitoring unit (60), wherein, if the phase output signals of the multiphase output signals are square waves capable of taking two types of values H and L, and the phase output signals of the multiphase output signals are all H at the same time or the phase output signals of the multiphase output signals are all L at the same time, outputting a signal anomaly alarm with use of the signal monitoring unit (60), wherein
the multiphase output signals output by the encoder (30) consist of a first phase output signal, a second phase output signal and a third phase output signal,
the multi-turn counters consist of a first multi-turn counter (41), a second multi-turn counter (42) and a third multi-turn counter (43),
the first multi-turn counter (41) outputs a first counter value based on the first phase output signal and the second phase output signal,
the second multi-turn counter (42) outputs a second counter value based on the first phase output signal and the third phase output signal,
the third multi-turn counter (43) outputs a third counter value based on the second phase output signal and the third phase output signal, and
either the first phase output signal, the second phase output signal and the third phase output signal have a phase difference of 120 degrees from each other,
or the first phase and the second phase output signal have a phase difference of 90 degrees, the first phase output signal and the third phase output signal have a phase difference of 135 degrees and the second phase output signal and the third phase output signal have a phase difference of 225 degrees.

## Patentansprüche

1. Eine Signalverarbeitungsvorrichtung für einen Drehgeber, umfassend:
einen Drehgeber (30, 31), der so konfiguriert ist, dass er mehrphasige Ausgangssignale mit mindestens drei Phasen ausgibt, wobei jedes Ausgangssignal einen Impuls pro Umdrehung einer Drehwelle (20) aufweist;
mindestens drei Mehrfach-Drehzahlmesser (41, 42, 43), die so konfiguriert sind, dass sie jeweils Zählerwerte ausgeben, und
eine Vergleichseinheit (50), die so konfiguriert ist, dass sie die Zählerwerte empfängt und die Zählerwerte vergleicht,
**dadurch gekennzeichnet, dass**
die Zählerwerte auf den Ausgangssignalen von zwei Phasen basieren,
die mindestens drei Mehrfach-Drehzahlmesser (41, 42, 43) so konfiguriert sind, dass sie jeweils verschiedene Kombinationen von Ausgangssignalen von zwei Phasen aus den mehrphasigen Ausgangssignalen empfangen,
die Signalverarbeitungsvorrichtung ferner eine Signalüberwachungseinheit (60) umfasst, die zur Überwachung der mehrphasigen Ausgangssignale konfiguriert ist,
wobei, wenn die Phasenausgangssignale der Mehrphasenausgangssignale Rechteckwellen sind, die zwei Arten von Werten H und L annehmen können, und die Phasenausgangssignale der Mehrphasenausgangssignale alle H zur gleichen Zeit sind oder die Phasenausgangssignale der Mehrphasenausgangssignale alle L zur gleichen Zeit sind, die Signalüberwachungseinheit (60) konfiguriert ist, einen Signalanomaliealarm auszugeben, wobei
die vom Drehgeber (30) ausgegebenen mehrphasigen Ausgangssignale aus einem ersten Phasenausgangssignal, einem zweiten Phasenausgangssignal und einem dritten Phasenausgangssignal bestehen,
die Mehrfach-Drehzahlmesser aus einem ersten Mehrfach-Drehzahlmesser (41), einem zweiten Mehrfach-Drehzahlmesser (42) und einem dritten Mehrfach-Drehzahlmesser (43) bestehen,
der erste Mehrfach-Drehzahlmesser (41) einen ersten Zählerwert auf der Grundlage des ersten Phasenausgangssignals und des zweiten Phasenausgangssignals ausgibt,
der zweite Mehrfach-Drehzahlmesser (42) einen zweiten Zählerwert auf der Grundlage des ersten Phasenausgangssignals und des dritten Phasenausgangssignals ausgibt,
der dritte Mehrfach-Drehzahlmesser (43) einen dritten Zählerwert basierend auf dem zweiten Phasenausgangssignal und dem dritten Phasenausgangssignal ausgibt, und
entweder das erste Phasenausgangssignal, das zweite Phasenausgangssignal und das dritte Phasenausgangssignal eine Phasendifferenz von 120 Grad zueinander haben,
oder die erste Phase und das zweite Phasenausgangssignal einen Phasenunterschied von 90 Grad, das erste Phasenausgangssignal und das dritte Phasenausgangssignal einen Phasenunterschied von 135 Grad und das zweite Phasenausgangssignal und das dritte Phasenausgangssignal einen Phasenunterschied von 225 Grad haben.

2. Signalverarbeitungsvorrichtung für einen Drehgeber nach Anspruch 1, wobei die Vergleichseinheit (50) einen Alarm für nicht übereinstimmende Zählerwerte ausgibt, wenn die Zählerwerte nicht übereinstimmen.

3. Verfahren zum Erzeugen von Mehrfach-Drehzahldaten eines Drehgebers, umfassend:
Ausgabe von mehrphasigen Ausgangssignalen von mindestens drei Phasen, wobei jedes Ausgangssignal einen Impuls pro Umdrehung eines Drehwinkels einer Drehwelle (20) unter Verwendung eines Drehgebers (30 und 31) aufweist;
Ausgabe von Zählerwerten unter Verwendung von mindestens drei Mehrfach-Drehzahlmessern (41, 42, 43); und
Vergleich der Zählerwerte mit Hilfe einer Vergleichseinheit (50),
**dadurch gekennzeichnet, dass**
das Verfahren jeweils das Zählen verschiedener Kombinationen von Ausgangssignalen zweier Phasen aus den mehrphasigen Ausgangssignalen umfasst, und
das Verfahren das Überwachen der mehrphasigen Ausgangssignale unter Verwendung einer Signalüberwachungseinheit (60) umfasst, wobei, wenn die Phasenausgangssignale der mehrphasigen Ausgangssignale Rechteckwellen sind, die zwei Arten von Werten H und L annehmen können, und die Phasenausgangssignale der mehrphasigen Ausgangssignale alle H zur gleichen Zeit sind oder die Phasenausgangssignale der mehrphasigen Ausgangssignale alle L zur gleichen Zeit sind, ein Signalanomaliealarm unter Verwendung der Signalüberwachungseinheit (60) ausgegeben wird, wobei
die vom Drehgeber (30) ausgegebenen mehrphasigen Ausgangssignale aus einem ersten Phasenausgangssignal, einem zweiten Phasenausgangssignal und einem dritten Phasenausgangssignal bestehen,
die Mehrfach-Drehzahlmesser aus einem ersten Mehrfach-Drehzahlmesser (41), einem zweiten Mehrfach-Drehzahlmesser (42) und einem dritten Mehrfach-Drehzahlmesser (43) bestehen,
der erste Mehrfach-Drehzahlmesser (41) einen ersten Zählerwert auf der Grundlage des ersten Phasenausgangssignals und des zweiten Phasenausgangssignals ausgibt,
der zweite Mehrfach-Drehzahlmesser (42) einen zweiten Zählerwert auf der Grundlage des ersten Phasenausgangssignals und des dritten Phasenausgangssignals ausgibt,
der dritte Mehrfach-Drehzahlmesser (43) einen dritten Zählerwert basierend auf dem zweiten Phasenausgangssignal und dem dritten Phasenausgangssignal ausgibt, und
entweder das erste Phasenausgangssignal, das zweite Phasenausgangssignal und das dritte Phasenausgangssignal eine Phasendifferenz von 120 Grad zueinander haben,
oder die erste Phase und das zweite Phasenausgangssignal einen Phasenunterschied von 90 Grad, das erste Phasenausgangssignal und das dritte Phasenausgangssignal einen Phasenunterschied von 135 Grad und das zweite Phasenausgangssignal und das dritte Phasenausgangssignal einen Phasenunterschied von 225 Grad haben.

## Revendications

1. Appareil de traitement de signal pour un codeur comprenant :
un codeur (30, 31) configuré pour émettre des signaux de sortie multiphases d'au moins trois phases, chaque signal de sortie ayant une impulsion par tour d'un arbre rotatif (20) ;
au moins trois compteurs multitours (41, 42, 43), configurés pour délivrer respectivement des valeurs de compteur, et ,
une unité de comparaison (50) configurée pour recevoir l'entrée des valeurs du compteur et comparer les valeurs du compteur,
**caractérisé en ce que**
les valeurs du compteur sont basées sur les signaux de sortie de deux phases,
les au moins trois compteurs multitours (41, 42, 43) sont configurés pour recevoir respectivement l'entrée de différentes combinaisons de signaux de sortie de deux phases parmi les signaux de sortie multiphases,
l'appareil de traitement des signaux comprend en outre une unité de surveillance des signaux (60) configurée pour surveiller les signaux de sortie multiphases,
dans lequel, si les signaux de sortie de phase des signaux de sortie multiphase sont des ondes carrées capables de prendre deux types de valeurs H et L, et que les signaux de sortie de phase des signaux de sortie multiphase sont tous H en même temps ou que les signaux de sortie de phase des signaux de sortie multiphase sont tous L en même temps, l'unité de surveillance des signaux (60) est configurée pour émettre une alarme d'anomalie de signal, dans lequel
les signaux de sortie multiphases émis par le codeur (30) se composent d'un signal de sortie de première phase, d'un signal de sortie de deuxième phase et d'un signal de sortie de troisième phase,
les compteurs multitours se composent d'un premier compteur multitours (41), d'un deuxième compteur multitours (42) et d'un troisième compteur multitours (43),
le premier compteur multitours (41) émet une première valeur de compteur sur la base du premier signal de sortie de phase et du second signal de sortie de phase,
le deuxième compteur multitours (42) émet une deuxième valeur de compteur en fonction du signal de sortie de la première phase et du signal de sortie de la troisième phase,
le troisième compteur multitours (43) émet une troisième valeur de compteur sur la base du signal de sortie de la deuxième phase et du signal de sortie de la troisième phase, et
le signal de sortie de la première phase, le signal de sortie de la deuxième phase et le signal de sortie de la troisième phase ont une différence de phase de 120 degrés l'un par rapport à l'autre,
ou la première phase et le deuxième signal de sortie de phase ont une différence de phase de 90 degrés, le premier signal de sortie de phase et le troisième signal de sortie de phase ont une différence de phase de 135 degrés et le deuxième signal de sortie de phase et le troisième signal de sortie de phase ont une différence de phase de 225 degrés.

2. Appareil de traitement de signal pour un codeur selon la revendication 1, dans lequel l'unité de comparaison (50) émet une alarme de non-concordance des valeurs de compteur si les valeurs de compteur ne concordent pas.

3. Procédé de génération de données multitours d'un codeur, comprenant :
émettre des signaux de sortie multiphases d'au moins trois phases, chaque signal de sortie ayant une impulsion par tour d'un angle de rotation d'un arbre rotatif (20) à l'aide d'un codeur (30 et 31) ;
la sortie des valeurs des compteurs à l'aide d'au moins trois compteurs multitours (41, 42, 43) ; et
comparer les valeurs des compteurs à l'aide d'une unité de comparaison (50),
**caractérisé en ce que**
la méthode consiste à compter respectivement différentes combinaisons de signaux de sortie de deux phases parmi les signaux de sortie multiphases, et
le procédé consiste à surveiller les signaux de sortie multiphase à l'aide d'une unité de surveillance des signaux (60), dans lequel, si les signaux de sortie de phase des signaux de sortie multiphase sont des ondes carrées capables de prendre deux types de valeurs H et L, et que les signaux de sortie de phase des signaux de sortie multiphase sont tous H en même temps ou que les signaux de sortie de phase des signaux de sortie multiphase sont tous L en même temps, l'unité de surveillance des signaux (60) émet une alarme d'anomalie de signal, dans laquelle
les signaux de sortie multiphases émis par le codeur (30) se composent d'un signal de sortie de première phase, d'un signal de sortie de deuxième phase et d'un signal de sortie de troisième phase,
les compteurs multitours se composent d'un premier compteur multitours (41), d'un deuxième compteur multitours (42) et d'un troisième compteur multitours (43),
le premier compteur multitours (41) émet une première valeur de compteur sur la base du premier signal de sortie de phase et du second signal de sortie de phase,
le deuxième compteur multitours (42) émet une deuxième valeur de compteur en fonction du signal de sortie de la première phase et du signal de sortie de la troisième phase,
le troisième compteur multitours (43) émet une troisième valeur de compteur sur la base du signal de sortie de la deuxième phase et du signal de sortie de la troisième phase, et
le signal de sortie de la première phase, le signal de sortie de la deuxième phase et le signal de sortie de la troisième phase ont une différence de phase de 120 degrés l'un par rapport à l'autre,
ou la première phase et le deuxième signal de sortie de phase ont une différence de phase de 90 degrés, le premier signal de sortie de phase et le troisième signal de sortie de phase ont une différence de phase de 135 degrés et le deuxième signal de sortie de phase et le troisième signal de sortie de phase ont une différence de phase de 225 degrés.
